(19) Europäisches Patentamt
European Patent Office
Office européen des brevets

(11) **EP 1 240 939 B1**

(12) **FASCICULE DE BREVET EUROPEEN**

(45) Date de publication et mention
de la délivrance du brevet:
**25.05.2016 Bulletin 2016/21**

(21) Numéro de dépôt: **02290622.6**

(22) Date de dépôt: **12.03.2002**

(51) Int Cl.:
***B01D 53/04*** (2006.01)      ***B01J 20/02*** (2006.01)

(54) **Absorbant a transfert de matière améliore pour procédé VSA ou PSA**

Absorptionsmittel mit verbessertem Stoffaustausch für PSA oder VSA Verfahren

Absorbent with improved mass transfer for PSA or VSA process

(84) Etats contractants désignés:
**AT BE CH CY DE DK ES FI FR GB GR IE IT LI LU MC NL PT SE TR**

(30) Priorité: **16.03.2001 FR 0103607**

(43) Date de publication de la demande:
**18.09.2002 Bulletin 2002/38**

(73) Titulaire: **L'AIR LIQUIDE, Société Anonyme pour l'Etude et l'Exploitation des Procédés Georges Claude**
**75007 Paris (FR)**

(72) Inventeurs:
• **Moreau, Serge**
**78140 Velizy Villacoublay (FR)**
• **Badiche, Xavier**
**75014 Paris (FR)**

(74) Mandataire: **Pittis, Olivier et al**
**L'Air Liquide, S.A.**
**Direction de la Propriété Intellectuelle**
**75, Quai d'Orsay**
**75321 Paris Cedex 07 (FR)**

(56) Documents cités:
**EP-A- 0 940 174     WO-A-99/43417**
**WO-A-99/43418     FR-A- 2 792 220**
**US-A- 5 672 195**

**Description**

L'invention concerne un matériau adsorbant mis en forme, par exemple sous forme de bâtonnets, de billes cylindriques ou elliptiques, ou analogues, utilisable pour purifier ou séparer des mélanges gazeux, notamment utilisables en procédé PSA (Pressure Swing Adsorption = Adsorption à pression modulée) ou en procédé VSA (Vacuum Swing Adsorption = Adsorption à vide modulé).

Les cycles de production dits à haute productivité sont caractérisés notamment par une alternance rapide des cycles d'adsorption/désorption, ce qui revient à adsorber la quantité de gaz correspondant à la capacité de l'adsorbant pendant un laps de temps réduit.

Pour ce faire, il est souhaitable de disposer d'adsorbants dans lesquels le transfert de matière entre la phase gazeuse et les sites d'adsorption est rapide.

Pour ce faire, il a déjà été proposé de diminuer la taille des particules d'adsorbants granulaires ou d'améliorer les capacités de transport des particules d'adsorbants sans modifier, ou peu, leur taille.

Il est aussi possible de mettre les adsorbants en forme monolithique, par exemple les "nids d'abeille" ou les "mille-feuilles".

Toutefois, si en théorie, il est toujours possible d'augmenter la cinétique d'adsorption d'un adsorbant en diminuant l'échelle de contact entre la phase gazeuse et la phase solide ou le rapport surface sur volume de l'adsorbant, cela conduit en général à des configurations d'adsorbant qui créent beaucoup de pertes de charge, ce qui engendre alors une dépense en énergie importante et, par conséquent, nuit à la rentabilité industrielle du procédé de production utilisant ces adsorbants.

Des adsorbants ayant une bonne cinétique d'adsorption sont notamment décrits par lesdits WO-A-99/43415, WO-A-99/43416, WO-A-99/43417 et WO-A-99/43418, EP-A-0940174 qui portent sur des procédés utilisant des agglomérats de zéolite dont les propriétés cinétiques ont été améliorées en vue d'une meilleure utilisation en VSA/PSA. Cependant, les approches décrites ne concernent que l'amélioration des propriétés de transport de la particule.

Une approche théorique a été présentée par Perera et col. dans Trans. IchemE, Vol. 76, Part A, Nov. 1998, pp. 921 à 941, ainsi que par Ruthven et col. dans Separation and Purification Technology, No. 12, (1997) pp. 43 à 60 et No. 13 (1998)pp. 181 à 193.

Une comparaison des performances des lits granulaires et des monolithes y est présentée. Cependant, si les facteurs individuels d'amélioration sont donnés, à savoir diamètre des canaux et des billes, diffusivité de la phase adsorbante, épaisseur de la couche adsorbante, densité de la phase adsorbante, propriétés d'adsorption, aucune indication concernant l'arrangement optimal de ces paramètres n'y est enseignée, et l'homme de l'art ne saurait pas quelle voie, en pratique, emprunter.

En fait, il apparaît qu'aucune des voies explorées n'est idéale car on rencontre dans leur mise en oeuvre des problèmes variés, tels que des problèmes de pertes de charge excessives pour les petites particules ou de mise en oeuvre pratique pour les monolithes, ou encore de modification des propriétés associées pour les particules à porosité améliorée, comme par exemple la baisse de résistance mécanique ou la baisse de densité lorsque la porosité devient trop élevée.

Partant de là, le but de l'invention est de proposer un adsorbant amélioré utilisable en procédé PSA ou analogue, lequel ne présente pas les inconvénients de l'art antérieur et ce, grâce à une prise en compte judicieuse à la fois des propriétés du matériau adsorbant et de sa géométrie vis à vis de la phase gazeuse qui assure le transport des adsorbats.

Dit autrement, le but de l'invention est de proposer un adsorbant dont les caractéristiques géométriques et intrinsèques conduisent à une utilisation optimale de celui-ci dans des cycles rapides de production ou de séparation de gaz par adsorption et ce, quelle que soit la forme particulière choisie pour cet adsorbant.

En d'autres termes, l'invention permet d'ajuster exactement les propriétés de transport du matériau et sa géométrie, en tenant compte d'autres critères, tels que les pertes de charge.

L'invention concerne alors un procédé de séparation ou de purification d'un mélange gazeux contenant de l'oxygène et de l'azote, ou d'un mélange gazeux contenant de l'hydrogène et au moins une impureté choisie parmi CO, CH4, CO2, O2 et N2 ou d'un mélange gazeux contenant l'air et au moins une impureté choisie parmi CO2 et H2O, par adsorption d'au moins un composé gazeux dudit mélange gazeux sur un matériau adsorbant mis en forme, comprenant une phase solide adsorbante et une phase gazeuse assurant le transport des composants gazeux jusqu'à la phase adsorbante, ledit matériau étant constitué de manière telle que les constantes de cinétique de transport des composants adsorbables dans la phase gazeuse et dans la phase solide sont dans un rapport compris entre 0,1 et 10, déterminé pour une vitesse débitante de gaz égale à 0,2 m.s<-1> mesuré sur de l'air à 1 bar et 20 DEG C, de préférence un procédé PSA ou VSA.

L'invention concerne aussi un procédé de séparation ou de purification d'un mélange gazeux contenant de l'oxygène et de l'azote, ou d'un mélange gazeux contenant de l'hydrogène et au moins une impureté choisie parmi CO, CH4, CO2, O2 et N2 ou d'un mélange gazeux contenant l'air et au moins une impureté choisie parmi CO2 et H2O, par adsorption d'au moins un composé gazeux dudit mélange gazeux sur un matériau adsorbant mis en forme, comprenant une phase solide adsorbante et une phase gazeuse assurant le transport des composants gazeux jusqu'à la phase adsorbante, ledit matériau étant constitué de manière telle que les constantes de cinétique de transport des composants adsorbables dans la phase gazeuse et dans la phase solide sont dans un rapport compris entre 0,1 et 10, déterminé pour une vitesse débitante de gaz égale à 0,01 m.s<-1> mesuré sur de l'hydrogène à 30 bars et 40 DEG C.

Selon le cas, le procédé peut comprendre l'une ou plusieurs des caractéristiques suivantes :

- le mélange gazeux contient de l'oxygène et de l'azote ;
- on adsorbe au moins une partie de l'azote sur ledit matériau adsorbant de manière à produire un flux gazeux enrichi en oxygène, de préférence le mélange gazeux est de l'air ;
- le mélange gazeux à purifier contient de l'hydrogène et au moins une impureté choisie parmi CO, $CH_4$, $CO_2$, $O_2$ et $N_2$ ;
- on adsorbe au moins une partie desdites impuretés sur ledit matériau adsorbant de manière à produire un flux gazeux enrichi en hydrogène ;
- le mélange gazeux à purifier est de l'air contenant au moins une impureté choisie parmi $CO_2$ et $H_2O$ ;
- on adsorbe au moins une partie desdites impuretés sur ledit matériau adsorbant de manière à produire de l'air purifié débarrassé d'au moins une partie desdites impuretés, de préférence l'air purifié obtenu est subséquemment .soumis à au moins une étape de distillation cryogénique ;
- le mélange gazeux contient au moins de l'hydrogène et du CO.

L'invention va être mieux comprise grâce aux explications suivantes.

Un adsorbeur comporte habituellement une phase solide adsorbante formée d'un ou plusieurs matériaux adsorbants et une phase gazeuse perméable au travers de laquelle les gaz à séparer circulent de l'entrée à la sortie de l'adsorbeur, les composants à éliminer se fixant sur la phase solide. Cette phase gazeuse est appelée "phase gazeuse circulante" ou plus simplement "phase gazeuse".

La différence entre les pressions à l'entrée et à la sortie, nécessaire à la circulation du gaz, est appelée perte de charge. La perte de charge est responsable d'une consommation d'énergie supplémentaire qui nuit à l'économie du procédé.

La phase solide comprend un réseau de pores dont la taille moyenne est habituellement comprise entre $0,020 \mu m$ et $20 \mu m$ environ appelé « réseau macropore ».

Il peut exister un réseau de pores encore plus petits appelés « micropores », rencontré par exemple dans les zéolites ou les adsorbants carbonés microporeux.

La phase solide peut être déposée sur un support non adsorbant dont la fonction est d'assurer une résistance ou un soutient mécanique, ou bien un rôle thermique de conduction ou de stockage de la chaleur.

Dans le réseau macropore, le déplacement des espèces gazeuses se fait par diffusion moléculaire ou selon le mécanisme de Knudsen ou bien par diffusion de surface. Toutefois, dans les cas où la pression totale varie, le mécanisme d'écoulement de Poiseuille peut aussi intervenir.

Le phénomène d'adsorption comprend deux étapes principales, à savoir le passage de l'adsorbat de la phase gazeuse circulante à la surface de la phase solide, suivi du passage de l'adsorbat de la surface au volume de la phase solide jusqu'aux sites d'adsorption.

Le transport dans la phase gazeuse circulante peut se faire, si l'écoulement est laminaire, par convection dans le sens de l'écoulement et par diffusion perpendiculairement à l'écoulement, ou bien si l'écoulement est turbulent, par convection puis diffusion isotrope dans la couche limite.

Pour la phase solide, le transfert de matière se fait par diffusion sauf dans les cas extrêmes où la perte de charge induit une convection au travers du solide ; toutefois, ces cas sont rares car la phase macropore est beaucoup moins perméable que la phase gazeuse circulante.

La cinétique de transfert de matière en phase solide est alors caractérisée par une constante de vitesse ou constante cinétique

$$\tau_s = \frac{D_s}{R_s^2} \qquad (en\ s^{-1}) \qquad\qquad (1)$$

où $D_s$ est le coefficient de diffusion dans la porosité de la phase solide, aussi appelée diffusion macropore, et $R_s$ est la dimension caractéristique du milieu solide.

La cinétique de transfert en phase gazeuse est caractérisée :

- en régime laminaire par une constante de vitesse transversale

$$\tau_g = \frac{D_g}{R_g^2} \qquad (en\ s^{-1}) \qquad (2)$$

où $D_g$ est le coefficient de diffusion dans la phase gazeuse et $R_g$ est la dimension caractéristique du milieu gazeux
- en régime turbulent par la diffusion au travers de la couche limite, avec une constant de vitesse

$$\tau_g' = k_f \times \frac{S}{V} \qquad (en\ s^{-1}) \qquad (3)$$

où S/V est le rapport surface sur volume et $k_f$ est le coefficient de transfert du film.

La nature du régime dépend du nombre de Reynolds (Re) et de la géométrie de l'écoulement .

Ainsi, dans des canaux linéaires de section quelconque, on est en régime laminaire pour Re<2000, turbulent pour Re>3000 (voir Techniques de l'ingénieur, chapitre J1065).

Le nombre de Reynolds est calculé par la formule suivante :

$$Re = \frac{\phi \times \rho \times u}{\eta} \qquad (4)$$

où $\phi = \dfrac{4 \times A}{P}$ est le diamètre hydraulique (m), A est la section et P est le périmètre (en m):

$\eta$ est la viscosité dynamique du gaz (Pa.s)
u est la vitesse du gaz (m.s$^{-1}$) ; dans ce cas, la vitesse débitante est égale à la vitesse réelle. Par vitesse débitante, on entend le débit réel du gaz divisé par la section droite de passage au sein de l'adsorbeur
$\rho$ est la masse volumique du gaz (kg.m$^{-3}$)

Par exemple, pour u= 1 m.s$^{-1}$, $\rho$ =1,3 kg.m-3, $\eta$ = 2,10$^{-5}$ Pa.s, D = 1,10$^{-3}$ m, on obtient Re = 67.

On voit ainsi que, pour les conduits linéaires, on est en régime laminaires jusqu'à des vitesses de plusieurs dizaines de mètres par seconde.

Par ailleurs, dans les lits granulaires, on est en régime turbulent pour Re > 6 (voir Techniques de l'ingénieur, chapitre J 1065).

Le nombre de Reynolds est alors donné par :

$$Re = \frac{\phi \times \rho \times u}{\eta} \quad où \quad \phi : \frac{4 \times A}{P}$$

est le diamètre hydraulique (m), A est la section (m$^2$), P est le périmètre (m), $\eta$ et $\rho$ sont comme ci-dessus et u est la vitesse du gaz (m.s$^{-1}$) réelle qui est égale à (vitesse débitante.tortuosité) / porosité, la tortuosité étant celle du lit

Pour des particules de 1 mm, on a encore Re = 67. On constate ainsi que, en lit granulaire, on est en régime turbulent.

Le calcul des coefficients de diffusion D et du coefficient de transfert par film sont calculés de la manière suivante, comme enseigné par D.M. Ruthven, « Principles of adsorption and adsorption processes », John-Wiley & Sons, 1984 (ci-après D.M. Ruthven) ou par R. T. Yang, « Gas séparation by adsorption processes » Butterworth Publishers, 1987; ou encore par J, Kärger et D. M. Ruthven «Diffusion in zeolites and other microporous solids" » John Wiley & Sons, 1992.

$D_g$ est appelé coefficient de diffusion moléculaire, lequel est caractéristique d'un composé présent dans un mélange gazeux à pression, température et composition données, son calcul se trouve, par exemple, dans « Diffusion in zeolites and other microporous solids », Kärger and Ruthven, John Wiley & Sons, 1992, p 87 à 98.

$D_s$ est le coefficient de diffusion macropore ; un modèle simple revient à écrire qu'il est fonction notamment de la porosité $\varepsilon$ et la tortuosité $\tau$ de la phase solide.

De là, on obtient

$$D_s = D_g \times \frac{\varepsilon}{\tau} \qquad (5)$$

Toutefois, la formule (5) ci-dessus n'est donnée qu'à titre illustratif et une formule différente aurait pu être utilisée pour définir $D_s$ en fonction de $D_g$ et ce, sans pour autant sortir du concept de la présente invention.

Par exemple, la limitation de la cinétique de transfert dans la phase solide peut aussi résulter du réseau micropore, par exemple pour une zéolite agglomérée ou un tamis moléculaire carboné. Dans ce cas, $D_s$ peut être modifié en faisant varier la taille des cristaux de zéolite, ou la taille des micropores du tamis moléculaire carboné.

Toutefois, il est possible de mesurer directement $D_s$, dans le cas où la formule (5) n'est pas considérée comme suffisante, comme il ressort par exemple de D.M. Ruthven « Principles of adsorption and adsorption processes » chapitre 5.2, p. 127 et suivantes.

On peut être amenés, suivant la méthode de mesure choisie, à mesurer l'adsorbant dans sa mise en forme définitive, ou bien la phase adsorbante seule, c'est-à-dire sans la structure de passages qui constitue la phase gazeuse circulante.

Par ailleurs, $k_f$ est calculé à partir de la formule de Petrovic et Thodos (voir D.M. Ruthven, p. 214), à savoir :

$$Sh = 0.357/\varepsilon \ \times Re^{0.64} \times Sc^{0.33} \qquad (6)$$

où : $\varepsilon$ est la porosité de l'adsorbant

$$Sh = \frac{\phi \times k_f}{D_g} \ \text{ est le nombre de Sherwood} \qquad (7)$$

$$Sc = \frac{\eta}{\rho \times \phi} \ \text{ est le nombre de Schmidt} \qquad (8)$$

En outre, le calcul des pertes de charges est réalisé comme suit :

- Pour un conduit droit :

$$\frac{\Delta P}{L} = \frac{32 \times \eta}{\phi^2} \times u \qquad (en \ Pa.m^{-1}) \qquad (9)$$

(voir Techniques de l'Ingénieur, p J 1065-3)

- Pour un lit granulaire :

$$\frac{\Delta P}{L} = 182 \times \frac{(1-\varepsilon)^2}{\varepsilon^3 \times \phi^2} \times \eta \times u + 1.92 \times \frac{1-\varepsilon}{\varepsilon^3 \times \phi} \times \rho \times u^2 \quad (en \ Pa.m^{-1}) \qquad (10)$$

Dans ces formules, $u$ est la vitesse débitante.

La formule (10) est la formule d'Ergun (chem. Eng. Prog., 48, p. 89, 1952), avec les coefficients adaptés à des zéolites en bille ; l'homme de l'art saura obtenir les coefficients correspondant à d'autres type d'adsorbants particulaires, par mesure directe, ou bien en s'aidant de la littérature (I. F. McDonald et col., Ind. Eng. Chem. Fundam., vol 18, No 3, 1979, p 199-208, R. M. Fand, J. Fluid Eng., vol 109, Sept. 1987, p 268-274))

La présente invention consiste à améliorer la géométrie et/ou les propriétés de transport de l'adsorbant en maintenant les pertes de charge à leur minimum.

Il existe deux types de configuration pour l'adsorption en lit fixe, à savoir :

- le lit granulaire, dans lequel l'adsorbant sous forme de particules de formes diverses est placé « en vrac » dans un adsorbeur. Du fait de la structure isotrope, le gaz peut circuler axialement ou radialement (circulation centrifuge ou centripète). La forme des particules peut être sphérique, elliptique, cylindrique ou équivalent, le rapport dimension de lit sur dimension de particule est suffisamment grand pour que l'on puisse raisonner en utilisant l'approximation du milieu continu isotrope;
- le « monolithe » constitué d'une masse plus ou moins rigide d'adsorbant disposée de manière à permettre le passage du gaz au travers dans des conduits proches de la linéarité, de section variée (circulaire, elliptique, carré, rectangulaire, étoilée, en forme de fentes).

Partant de là, les inventeurs de la présente invention ont mis en évidence qu'il est possible de définir la géométrie des adsorbants de manière à exploiter au mieux les capacités de transport du matériau avec une perte de charge réduite.

Par géométrie, on entend la dimension caractéristique de l'espace alloué à la phase gazeuse et à la phase solide.

Les formules (1) à (4) ci-avant font intervenir de telles dimensions.

Pour une forme donnée, la dimension caractéristique se réduit à un facteur d'échelle.

Pour des formes quelconques, on fait appel à des grandeurs telles que rapport surface sur périmètre (diamètre hydraulique), surface sur volume (facteur de sphéricité). De là, on peut calculer de telles grandeurs pour la plupart des géométries et, le cas échéant, il est toujours possible d'effectuer le calcul de transfert de matière par résolution numérique de équations de transport, puis de comparer les résultats à ceux d'une sphère.

Selon l'invention, on utilise les équation (1) à (10) ci-avant pour résoudre les problèmes liés à la détermination des conditions optimales de transfert de matière et de perte de charge.

L'invention consiste donc à améliorer les dimensions des phases gazeuse et solide en vue d'une exploitation équilibrée des capacités cinétiques des deux phases avec un coût énergétique dû aux pertes de charges minimal.

Trois facteurs sont dès lors à prendre en compte, à savoir :

- $\tau_s$ qui est la constante de vitesse du transfert dans la phase solide,
- $\tau_g$ qui est la constante de vitesse du transfert dans la phase gazeuse,
- $\dfrac{\Delta P}{L}$ qui est la perte de charge

On cherche d'abord à équilibrer les constantes cinétiques des deux milieux, soit : $\tau_s \approx \tau_g$.

En effet, il ne ressort pas des travaux précédents qu'il est important que les deux mécanismes de transfert de matière introduisent des résistances comparables, ce qui conduit, par les équations (1) à (8), à définir des relations entre propriétés géométriques et propriétés de transport du solide.

On peut, soit être amené à modifier la taille respective des phases, soit modifier la phase solide (porosité, tortuosité).

Ensuite, on utilise les équations (9) à (10) pour optimiser la perte de charge. On peut être amené à choisir une géométrie particulière.

Les critères liés à la cinétique et à la perte de charge ne sont pas indépendants et le coeur de l'invention réside dans le fait de permettre une définition complète de l'ensemble, à savoir géométrie-taille-matériau, en vue de l'optimisation de l'ensemble au plan cinétique et perte de charge.

Exemple 1 : Définition des proportions géométriques pour l'équirépartition des constantes de cinétique.

Dans le cas d'une structure à canaux linéaires, la contrainte à respecter est alors:

$$\tau_g \approx \tau_s \qquad \text{soit} \qquad \frac{D_g}{R_g^2} \approx \frac{D_s}{R_s^2} \qquad \text{ou encore} \qquad \frac{R_s}{R_g} \approx \sqrt{\frac{D_s}{D_g}} \qquad (11)$$

ou bien encore suivant le modèle simple

$$\frac{R_s}{R_g} \approx \sqrt{\frac{\varepsilon}{\tau}} \qquad (12)$$

Cela conduit à relier le rapport géométrique des phases solide et gazeuse à leurs propriétés de transport respectives. On voit qu'elle permet aussi d'introduire la structure poreuse de la phase solide.

$R_s$ et $R_g$ sont des facteurs d'échelle. Leur valeur exacte est à déterminer précisément en fonction de la configuration, par exemple:

- canaux circulaires, elliptiques, carrés, hexagonaux ...
- disposition des canaux en réseau carré, hexagonal, triangulaire ...
- canaux sous forme de fentes, rectangle aplati ...

L'optimisation de l'adsorbant peut ainsi se faire, à partir de l'équation (11), par ajustement de la géométrie, ou par ajustement de la diffusivité du matériau adsorbant, ou encore en jouant sur les deux facteurs.

Ainsi, dans le cas d'un lit granulaire, la contrainte à respecter est :

$$\tau_g \approx \tau_s \qquad \text{soit} \qquad 15 \times \frac{D_s}{R_s^2} \approx k_f \times \frac{S}{V} \qquad\qquad (13)$$

où : $R_s$ est le rayon dans le cas d'une sphère, ou de manière générale la demi-épaisseur de là phase solide

Le facteur 15 provient de la calibration des équations de transfert par film (Equation Différentielle Ordinaire du premier ordre) et de la diffusion (Equation aux Dérivées Partielles du second ordre), voir les documents ci-avant.

De là, pour des particules sphériques, on obtient alors :

$$15 \times \frac{D_s}{R_s^2} \approx k_f \times \frac{3}{R_s} \qquad \text{soit} \qquad 5 \times \frac{D_s}{R_s} = k_f \qquad\qquad (14)$$

Là encore, on établit une relation entre les propriétés de transport et les propriétés géométriques des phases gazeuse et solide.

Ensuite, on modifie les dimensions ou les propriétés de la phase solide, ou bien les deux, pour satisfaire à l'équation (14).

On remarquera que, pour les adsorbants granulaires actuellement disponibles, le critère ci-dessus n'est pas respecté, à savoir que la diffusion par film est bien plus rapide que la diffusion macropore (voir par exemple Ruthven, p 217).

Exemple 2 : Définition de l'échelle géométrique pour les pertes de charges.

En outre, la perte de charge impose de fortes contraintes à l'accélération des cycles PSA/VSA. La réduction du temps de cycle impose une augmentation du rapport surface sur volume de l'adsorbant, donc une diminution de taille du milieu gazeux favorable aux pertes de charge, ainsi qu'une augmentation des vitesse de gaz qui est un facteur supplémentaire d'accroissement des pertes de charge. Là encore, les adsorbants granulaires actuellement disponibles ne correspondent pas à l'optimum recherché : on n'utilise pas de billes d'adsorbants dont la taille soit beaucoup inférieure à 1 mm à cause des pertes de charge occasionnées, sauf dans des application particulières où la consommation d'énergie n'a que peu d'importance, tels que les générateurs d'oxygène médicaux individuels.

Les formules (9) et (10) permettent, connaissant la dimension caractéristique et la porosité du milieu solide, de calculer la perte de charge.

Appelons $\left.\dfrac{\Delta P}{L}\right|_{\text{lim}}$ la valeur maximale acceptable de la perte de charge, alors :

Pour des canaux linéaires, la formule (9) donne :

$$\frac{u}{\phi^2} = \frac{1}{32 \times \eta} \times \left.\frac{\Delta P}{L}\right|_{\text{lim}}$$

Pour un lit granulaire, la formule (10) donne

7

$$\frac{\Delta P}{L}\bigg|_{lim} = 182 \times \frac{(1-\varepsilon)^2}{\varepsilon^3 \times \phi^2} \times \eta \times u + 1.92 \times \frac{1-\varepsilon}{\varepsilon^3 \times \phi} \times \rho \times u^2$$

Il est à la portée de l'homme de l'art de résoudre ces équations en $u$ et $\phi$, et trouver ainsi la relation $\phi = f(u)$ qui répond à la contrainte $\dfrac{\Delta P}{L}\bigg|_{lim}$.

En résumé, comme il ressort des exemples 1 et 2 ci-avant, le calcul propre à l'invention est conduit de la manière suivante.

D'abord, on définit la géométrie et/ou le matériau adsorbant de telle sorte que les constantes cinétiques de transport de matière sur la phase gazeuse et sur la phase solide soient proches.

Ensuite, on définit le facteur d'échelle et/ou la configuration de telle sorte que la perte de charge soit acceptable dans les conditions du cycle PSA/VSA, définies en temps de cycle ou en vitesse de gaz.

Par un travail d'aller-retour, basé sur un ajustement réciproque de la géométrie et du facteur d'échelle de l'adsorbant, on détermine la configuration qui satisfait les critères de cinétique et de perte de charge ou, à défaut, qui s'en approche le plus possible.

Exemple 3 : A titre d'exemple, on fixe des conditions de cycle VSA/PSA basé sur un lit granulaire, telles que la vitesse de gaz pendant au moins une des phases d'adsorption soit de 1 m.s$^{-1}$, et telles que la cinétique d'adsorption exprimée par le paramètre de modèle LDF (Linear Driving Force) soit égale à ak = 20 s$^{-1}$.

Le modèle LDF exprime la cinétique d'adsorption sous forme linéaire en fonction de l'écart à l'équilibre :

$$\frac{dq}{dt} = a'_k \times (q^* - q) \text{ ou } a_k \times (P - P^*) \qquad a_k' \approx \frac{a_k \times 2}{\left(\dfrac{q}{P^*} + \dfrac{q^*}{P}\right)} \qquad (15)$$

où : P est la pression réelle, q est la quantité moyenne réelle adsorbée, P* est la pression correspondant à l'équilibre avec la quantité q, et q* la quantité adsorbée à l'équilibre avec la pression P.

$$q^* = f(P), \qquad q = f(P^*), \qquad f(p) = \text{isotherme}$$

La modélisation des cycles PSA en prenant le modèle LDF pour décrire la cinétique est très courante (voir les documents de Ruthven ou de Yang).

Le mécanisme de diffusion en phase gazeuse conduit au transfert par couche limite (voir formule (3)), on a alors :

$$a_k = k_f \times \frac{S}{V} \qquad (16)$$

Le mécanisme diffusionnel en phase solide est exprimé par (voir formule (1)) :

$$a_k = 15 \times \frac{D_s}{R_s^2} \qquad (17)$$

De là, le calcul pour une structure à lit granulaire conduit à ce qui suit. On applique la formule (6) pour le transfert de matière :

$$Sh = 0{,}357/\varepsilon \times 0{,}35 \times Re^{0.64} \times Sc^{0.33},$$

soit :

$$k_f = \frac{D_g}{2 \times R_s} \times \frac{0{,}357}{\varepsilon} \times Re^{0.64} \times Sc^{0.33} \qquad (19)$$

Le critère sur la cinétique est :

$$\text{où } \phi = 2 \times R_s$$

L'homme de l'art sait résoudre les équations (19) et (20), et établir la relation $D_s = f(R_s, u)$, ou l'une des deux autres en $R_s$ et $u$ qui satisfait à l'équation (20).

La perte de charge est :

où $\phi = 2 \times R_s$

L'homme de l'art sait résoudre les équations (19) et (20), et établir la relation $D_s = f(R_s, u)$, ou l'une des deux autres en $R_s$ et $u$ qui satisfait à l'équation (20).

La perte de charge est :

$$\frac{\Delta P}{L} = 182 \times \frac{(1-\varepsilon)^2}{\varepsilon^3 \times \phi^2} \times \eta \times u + 1{,}92 \times \frac{1-\varepsilon}{\varepsilon^3 \times \phi} \times \rho \times u^2 \qquad (21)$$

Si l'on pose une perte de charge limite, l'équation (21) ajoute une contrainte $R_s = g(u)$. La relation en $f$ ci-dessus se réduit à $D_s = h(u)$. Il reste alors à ajuster le temps de cycle, qui définit $u$, à la diffusivité intrinsèque de l'adsorbant.

La manière d'appliquer la méthode pour d'autres configurations (lit granulaire ou canaux) et d'autres régimes (laminaire ou turbulent) est à la portée de l'homme du métier.

De la même manière, on effectue les calculs pour tout type de gaz dont on peut connaître les paramètres donnés dans les formules ci-dessus. La mesure des propriétés d'un adsorbant vis-à-vis d'un gaz donné, tel l'air à 1 bar et 20°C, permet de définir tous les paramètres définis dans le cadre de la présente invention, et de calculer les propriétés de l'adsorbant pour d'autres gaz, température et pression.

Pour illustrer une autre manière de conduire l'optimisation de l'adsorbant au cycle, on part d'un cycle VSA/PSA ayant un temps de cycle donné, de préférence court, par exemple, de 1 sec à 30 sec, dont les caractéristiques sont le diagramme des pressions, la définition des étapes et le temps alloué à chacune d'elles, et d'un adsorbant ayant des propriétés d'adsorption connues, dont les caractéristiques sont les quantités adsorbées de chacun des constituants et, en corollaire, les quantité relatives, c'est-à-dire la sélectivité.

De là, il est alors possible, par simulation ou bien par essais à partir de temps de cycle longs, par exemple, de 60 sec à 300 sec, d'obtenir les performances limites de l'adsorbant, dans des conditions où les irréversibilités thermodynamiques n'interviennent pas.

En pratique, l'adsorbant sous sa forme utilisable industriellement, par exemple agglomérée, présente des irréversibilités qui sont essentiellement les pertes de charge et la vitesse finie d'adsorption.

L'invention permet alors de définir les caractéristiques que l'adsorbant doit posséder pour approcher d'aussi près que l'on veut des performances limites.

Pour cela, on fixe d'abord la perte de charge limite acceptable. A partir des propriétés de l'adsorbant et des caractéristiques du cycle, on calcule les vitesses de passage du gaz. Les équations données dans l'invention permettent alors de calculer la géométrie du réseau de transport.

En outre, à partir du principe de quasi égalité des constantes cinétiques sur la phase gazeuse et solide, on calcule le paramètre $D_s/R_s^2$. Il ne reste plus qu'à ajuster les valeurs respectives de $D_s$ et $R_s^2$,

Si plusieurs configurations apparaissent acceptables, on choisit à partir d'autres critères, tels que coût, mise en oeuvre...

Exemple 4 :

Une application numérique de ce qui précède appliquée à un mélange d'oxygène et d'azote, tel l'air, à 20° C et 1 bar, conduit à :

$$D_S = 1{,}5 \times 10^{-5} m^2 \times s^{-1}$$

$$\eta = 1{,}5 \times 10^{-5} Pa \times s$$

$$\rho = 1{,}3 \, kg \pm m^{-3}$$

De là, pour un lit granulaire de porosité 0.35, de diamètre de bille de 1 mm, et une vitesse de passage du gaz de 1 m.s$^{-1}$, la formule (10) permet de calculer une perte de charge :

$$\frac{\Delta P}{L} = 66100 \, Pa \times m^{-1}$$

La formule (6) permet de calculer :

$$k_f = 0{,}225 \, s^{-1}$$

La formule (14) conduit à :

$$\frac{D_s}{R_s} = 0{,}045 s^{-1} \qquad \text{soit } D_s \approx 2{,}25.10^{-5} \text{ m}^2.\text{s}^{-1} \, .$$

On vérifie bien que, les lits granulaires standards ne sont pas optimaux, puisque la diffusivité du matériau devrait être supérieure à la diffusivité moléculaire.

De même, pour un conduit droit de diamètre 1 mm, la formule (9) donne

$$\frac{\Delta P}{L} = 624 \, Pa \times m^{-1}$$

La formule (11) conduit alors à

$$\frac{R_s}{R_g} \approx \sqrt{\frac{D_s}{D_g}}$$

Ainsi, par exemple, si Ds = 5.6.10$^{-6}$ m$^2$.s$^{-1}$, alors on a :

$$\frac{R_s}{R_g} \approx \sqrt{\frac{5{,}6.10^{-6}}{1{,}5.10^{-5}}} = 0{,}61$$

Là encore, on comprend qu'il est aussi possible de calculer l'un quelconque des paramètres $D_g$, $D_s$ et $R_s$ connaissant les deux autres.

A partir des mêmes formules, on peut partir d'une perte de charge donnée et calculer la taille des particules et partant le $D_s$ correspondants. Avec ce jeu d'équations, il est possible de fixer un quelconque paramètre et d'en déduire les autres, suivant l'objectif pratique visé.

**Revendications**

1. Procédé de séparation ou de purification d'un mélange gazeux, contenant de l'oxygène ou de l'azote, ou d'un mélange gazeux contenant de l'hydrogène et au moins une impureté choisie parmi CO, $CH_4$, $CO_2$ $O_2$ et $N_2$, ou d'un mélange gazeux contenant de l'air et une impureté choisie parmi $CO_2$ et $H_2O$ par adsorption d'au moins un composé gazeux dudit mélange gazeux sur un matériau adsorbant mis en forme, comprenant une phase solide adsorbante et une phase gazeuse assurant le transport des composants gazeux jusqu'à la phase adsorbante, ledit matériau étant constitué de manière telle que les constantes de cinétique de transport des composants adsorbables dans la phase gazeuse et dans la phase solide sont dans un rapport compris entre 0,1 et 10, déterminé pour une vitesse débitante de gaz égale à 0,2 m.s$^{-1}$ mesuré sur de l'air à 1 bar et 20°C.

2. Procédé de séparation ou de purification d'un mélange gazeux, contenant de l'oxygène ou de l'azote, ou d'un mélange gazeux contenant de l'hydrogène et au moins une impureté choisie parmi CO, $CH_4$, $CO_2$, $O_2$ et $N_2$, ou d'un mélange gazeux contenant de l'air et une impureté choisie parmi $CO_2$ et $H_2O$ par adsorption d'au moins un composé gazeux dudit mélange gazeux sur un matériau adsorbant mis en forme, comprenant une phase solide adsorbante et une phase gazeuse assurant le transport des composants gazeux jusqu'à la phase adsorbante, ledit matériau étant constitué de manière telle que les constantes de cinétique de transport des composants adsorbables dans la phase gazeuse et dans la phase solide sont dans un rapport compris entre 0,1 et 10, déterminé pour une vitesse débitante de gaz égale à 0,01 m.s$^{-1}$ mesuré sur de l'hydrogène à 30 bars et 40°C.

3. Procédé selon l'une des revendications 1 ou 2, **caractérisé en ce que** le rapport est compris entre 0,5 et 4, de préférence entre 0,5 et 2.

4. Procédé selon l'une des revendications 1 ou 3, **caractérisé en ce qu'**il est constitué de manière telle que les pertes de charge pour une vitesse débitante de gaz de 0,2 m/s sont comprises entre 250 et 75000 Pa.m$^{-1}$.

5. Procédé selon la revendication 4, **caractérisé en ce que** la perte de charge est comprise entre 500 et 35000 Pa.m$^{-1}$, de préférence comprise entre 1000 et 20000 Pa.m$^{-1}$.

6. Procédé selon l'une des revendications 1 à 5, **caractérisé en ce que** la matériau adsorbant est utilisé dans un cycle tel que la vitesse du gaz au travers de l'adsorbant peut dépasser 0,3 m.s$^{-1}$.

7. Procédé selon la revendication 6, **caractérisé en ce que** la vitesse du gaz est supérieure à 0,4 m.s$^{-1}$, de préférence supérieure à 0,5 m.s$^{-1}$.

8. Procédé selon les revendications 1 à 7, **caractérisé en ce que** la dimension moyenne de la phase gazeuse assurant le transport convectif du gaz est de dimension moyenne comprise entre 0,01 et 1 mm.

9. Procédé selon la revendication 8, **caractérisée en ce que** la dimension de la phase gazeuse est comprise entre 0,01 et 0,3 mm, de préférence comprise entre 0,01 et 0,15 mm.

10. Procédé selon la revendication 1, **caractérisé en ce que** ledit procédé est un procédé PSA ou VSA.

11. Procédé selon l'une des revendications 1 à 10, **caractérisé en ce que** le mélange gazeux contient de l'oxygène et de l'azote, et **en ce qu'**on adsorbe au moins une partie de l'azote sur un matériau adsorbant selon la revendication 1 de manière à produire un flux gazeux enrichi en oxygène, de préférence le mélange gazeux est de l'air.

12. Procédé selon l'une des revendications 1 à 10, **caractérisé en ce que** le mélange gazeux à purifier contient de l'hydrogène et au moins une impureté choisie parmi CO, $CH_4$, $CO_2$, $O_2$ et $N_2$ et **en ce qu'**on adsorbe au moins une partie desdites impuretés sur un matériau adsorbant selon la revendication 2 de manière à produire un flux gazeux enrichi en hydrogène.

13. Procédé selon l'une des revendications 1 à 10, **caractérisé en ce que** le mélange gazeux à purifier est de l'air contenant au moins une impureté choisie parmi $CO_2$ et $H_2O$ et **en ce qu'**on adsorbe au moins une partie desdites impuretés sur un matériau adsorbant selon la revendication 1. de manière à produire de l'air purifié débarrassé d'au moins une partie desdites impuretés, de préférence l'air purifié obtenu est subséquemment soumis à au moins une étape de distillation cryogénique.

**14.** Procédé selon la revendication 12, **caractérisé en ce que** le mélange gazeux contient au moins de l'hydrogène et du CO.

**Patentansprüche**

**1.** Verfahren zum Trennen oder Reinigen einer gasförmigen Mischung, enthaltend Sauerstoff oder Stickstoff, oder einer gasförmigen Mischung, enthaltend Wasserstoff und mindestens eine Verunreinigung, ausgewählt aus CO, $CH_4$, $CO_2$, $O_2$ und $N_2$, oder einer gasförmigen Mischung, enthaltend Luft und eine Verunreinigung, ausgewählt aus $CO_2$ und $H_2O$, durch Adsorption von mindestens einer gasförmigen Verbindung der gasförmigen Mischung auf einem geformten adsorbierenden Material, umfassend eine feste adsorbierende Phase und eine gasförmige Phase, die den Transport der gasförmigen Komponenten in die adsorbierende Phase sicherstellt, wobei das Material derart gebildet ist, dass die kinetischen Konstanten des Transports der Komponenten, die in der gasförmigen und in der festen Phase adsorbierbar sind, in einem Verhältnis vorliegen, das zwischen 0,1 und 10 liegt, bestimmt für eine Durchflussgeschwindigkeit von Gas gleich 0,2 m.s$^{-1}$ gemessen bei Luft mit 1 bar und 20 °C.

**2.** Verfahren zum Trennen oder Reinigen einer gasförmigen Mischung, enthaltend Sauerstoff oder Stickstoff, oder einer gasförmigen Mischung, enthaltend Luft und mindestens eine Verunreinigung, ausgewählt aus CO, $CH_4$, $CO_2$, $O_2$ und $N_2$, oder einer gasförmigen Mischung, enthaltend Luft und eine Verunreinigung, ausgewählt aus $CO_2$ und $H_2O$, durch Adsorption von mindestens einer gasförmigen Verbindung der gasförmigen Mischung auf einem geformten adsorbierenden Material, umfassend eine feste adsorbierende Phase und eine gasförmige Phase, die den Transport der gasförmigen Komponenten in die adsorbierende Phase sicherstellt, wobei das Material derart gebildet ist, dass die kinetischen Konstanten des Transports der Komponenten, die in der gasförmigen und in der festen Phase adsorbierbar sind, in einem Verhältnis vorliegen, das zwischen 0,1 und 10 liegt, bestimmt für eine Durchflussgeschwindigkeit von Gas gleich 0,01 m.s$^{-1}$ gemessen bei Luft mit 30 bar und 40 °C

**3.** Verfahren nach einem der Ansprüche 1 oder 2, **dadurch gekennzeichnet, dass** das Verhältnis zwischen 0,5 et 4 liegt, vorzugsweise zwischen 0,5 und 2.

**4.** Verfahren nach einem der Ansprüche 1 oder 3, **dadurch gekennzeichnet, dass** es derart gebildet ist, dass die Ladungsverluste für eine Durchflussgeschwindigkeit von Gas von 0,2 m/s die zwischen 250 und 75000 Pa.m$^{-1}$ liegen.

**5.** Verfahren nach Anspruch 4, **dadurch gekennzeichnet, dass** der Ladungsverlust zwischen 500 und 35000 Pa.m$^{-1}$ liegt, vorzugsweise zwischen 1000 und 20000 Pa.m$^{-1}$.

**6.** Verfahren nach einem der Ansprüche 1 bis 5, **dadurch gekennzeichnet, dass** das adsorbierende Material in einem Zyklus derart verwendet wird, dass die Geschwindigkeit des Gases durch das Adsorptionsmittel 0,3 m.s$^{-1}$ übersteigen kann.

**7.** Verfahren nach Anspruch 6, **dadurch gekennzeichnet, dass** die Geschwindigkeit des Gases höher als 0,4 m.s$^{-1}$, vorzugsweise höher als 0,5 m.s$^{-1}$.

**8.** Verfahren nach Anspruch 1 bis 7, **dadurch gekennzeichnet, dass** die mittlere Größe der gasförmigen Phase, die den konvektiven Transport des Gases sicherstellt, eine mittlere Größe ist, die zwischen 0,01 und 1 mm liegt.

**9.** Verfahren nach Anspruch 8, **dadurch gekennzeichnet, dass** die Größe der gasförmigen Phase zwischen 0,01 und 0,3 mm liegt, vorzugsweise zwischen 0,01 und 0,15 mm.

**10.** Verfahren nach Anspruch 1, **dadurch gekennzeichnet, dass** das Verfahren ein PSA- oder VSA-Verfahren ist.

**11.** Verfahren nach einem der Ansprüche 1 bis 10, **dadurch gekennzeichnet, dass** die gasförmige Mischung Sauerstoff und Stickstoff enthält, und dadurch, dass mindestens ein Teil des Stickstoffs auf einem adsorbierenden Material gemäß Anspruch 1 adsorbiert wird, um einen Gasfluss zu erzeugen, der mit Sauerstoff angereichert ist, vorzugsweise ist die gasförmige Mischung Luft.

**12.** Verfahren nach einem der Ansprüche 1 bis 10, **dadurch gekennzeichnet, dass** die zu reinigende gasförmige Mischung Wasserstoff und mindestens eine Verunreinigung enthält, ausgewählt aus CO, $CH_4$, $CO_2$, $O_2$ und $N_2$, und dadurch, dass mindestens ein Teil der Verunreinigungen auf einem adsorbierenden Material gemäß Anspruch 2 adsorbiert wird, um einen Gasfluss zu erzeugen, der mit Wasserstoff angereichert ist.

13. Verfahren nach einem der Ansprüche 1 bis 10, **dadurch gekennzeichnet, dass** die zu reinigende gasförmige Mischung Luft ist, enthaltend mindestens eine Verunreinigung, ausgewählt aus $CO_2$ und $H_2O$, und dadurch, dass mindestens ein Teil der Verunreinigungen auf einem adsorbierenden Material gemäß Anspruch 1 adsorbiert wird, um gereinigte Luft zu erzeugen, die mindestens von einem Teil der Verunreinigungen befreit ist, vorzugsweise wird die gereinigte Luft in der Folge mindestens einem Schritt des kryogenischen Destillierens unterzogen.

14. Verfahren nach Anspruch 12, **dadurch gekennzeichnet, dass** die gasförmige Mischung mindestens Wasserstoff und CO umfasst.

**Claims**

1. Method for separating or purifying a gaseous mixture, comprising oxygen or nitrogen, or a gaseous mixture containing hydrogen and at least one impurity chosen from CO, $CH_4$, $CO_2$, $O_2$ and $N_2$, or a gaseous mixture containing air and an impurity chosen from $CO_2$ and $H_2O$, by adsorption of at least one gaseous compound of said gaseous mixture in a formed adsorbant material, comprising an adsorbant solid phase and a gaseous phase providing the transport of the gaseous components to the adsorbant phase, said material being constituted in such a way that the kinetic transport constants of the adsorbable components in the gaseous phase and in the solid phase are in a ratio between 0.1 and 10, determined for a gas flow speed equal to 0.2 $m.s^{-1}$ measured in air at 1 bar and 20°C.

2. Method for separating or purifying a gaseous mixture, comprising oxygen or nitrogen, or a gaseous mixture containing hydrogen and at least one impurity chosen from CO, $CH_4$, $CO_2$, $O_2$ and $N_2$, or a gaseous mixture containing air and an impurity chosen from $CO_2$ and $H_2O$, by adsorption of at least one gaseous compound of said gaseous mixture in a formed adsorbant material, comprising an adsorbant solid phase and a gaseous phase providing the transport of the gaseous components to the adsorbant phase, said material being constituted in such a way that the kinetic transport constants of the adsorbable components in the gaseous phase and in the solid phase are in a ratio between 0.1 and 10, determined for a gas flow speed equal to 0.01 $m.s^{-1}$ measured in hydrogen at 30 bars and 40°C.

3. Method according to one of claims 1 or 2, **characterised in that** the ratio is between 0.5 and 4, preferably between 0.5 and 2.

4. Method according to one of claims 1 or 3, **characterised in that** it is constituted in such a way that the pressure drops for a gas flow speed of 0.2 m/s are between 250 and 75,000 $Pa.m^{-1}$.

5. Method according to claim 4, **characterised in that** the pressure drop is between 500 and 35,000 $Pa.m^{-1}$, preferably between 1,000 and 20,000 $Pa.m^{-1}$.

6. Method according to one of claims 1 to 5, **characterised in that** the adsorbant material is used in a cycle such that the speed of the gas through the adsorbant material can exceed 0.3 $m.s^{-1}$.

7. Method according to claim 6, **characterised in that** the speed of the gas is greater than 0.4 $m.s^{-1}$, preferably greater than 0.5 $m.s^{-1}$.

8. Method according to claims 1 to 7, **characterised in that** the mean dimension of the gaseous phase providing the convective transport of the gas is of a mean dimension between 0.01 and 1 mm.

9. Method according to claim 8, **characterised in that** the dimension of the gaseous phase is between 0.01 and 0.3 mm, preferably between 0.01 and 0.15 mm.

10. Method according to claim 1, **characterised in that** said method is a PSA or VSA method.

11. Method according to one of claims 1 to 10, **characterised in that** the gaseous mixture contains oxygen and nitrogen, and **in that** at least one portion of the nitrogen is adsorbed in an adsorbant material according to claim 1 in such a way as to produce a gas flow rich in oxygen, more preferably the gaseous mixture is air.

12. Method according to one of claims 1 to 10, **characterised in that** the gaseous mixture to be purified contains hydrogen and at least one impurity chosen from CO, $CH_4$, $CO_2$, $O_2$ and $N_2$ and **in that** at least one portion of said impurities is adsorbed in an adsorbant material according to claim 2 in such a way as to produce a gas flow rich in hydrogen.

13. Method according to one of claims 1 to 10, **characterised in that** the gaseous mixture to be purified is air containing at least one impurity chosen from $CO_2$ and $H_2O$ and **in that** at least one portion of said impurities is adsorbed in an adsorbant material according to claim 1 in such a way as to produce purified air from which at least one portion of said impurities is removed, more preferably the purified air obtained is subsequently subjected to at least one step of cryogenic distillation.

14. Method according to claim 12, **characterised in that** the gaseous mixture contains at least hydrogen and CO.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9943415 A
- WO 9943416 A
- WO 9943417 A

- WO 9943418 A
- EP 0940174 A

**Littérature non-brevet citée dans la description**

- *Trans. IchemE,* Novembre 1998, vol. 76, 921-941
- **RUTHVEN.** *Separation and Purification Technology,* 1997, 43-60
- *SEPARATION AND PURIFICATION TECHNOLO-GY,* 1998, 181-193
- **D.M. RUTHVEN.** Principles of adsorption and adsorption processes. John-Wiley & Sons, 1984
- **R. T. YANG.** Gas séparation by adsorption processes. Butterworth Publishers, 1987

- **J, KÄRGER ; D. M. RUTHVEN.** Diffusion in zeolites and other microporous solids. John Wiley & Sons, 1992
- **KÄRGER ; RUTHVEN.** Diffusion in zeolites and other microporous solids. John Wiley & Sons, 1992, 87-98
- *chem. Eng. Prog.,* 1952, vol. 48, 89
- **I. F. MCDONALD.** *Ind. Eng. Chem. Fundam,* 1979, vol. 18 (3), 199-208
- **R. M. FAND.** *J. Fluid Eng.,* Septembre 1987, vol. 109, 268-274